# EUROPEAN PATENT APPLICATION

(11) **EP 2 262 133 A1**
(43) Date of publication of application: **15.12.2010**
(21) Application number: 09737659.4
(22) Date of filing: 15.04.2009
(51) Int. Cl.: H04B 10/12

(54) **EXTENDING METHOD DEVICE AND SYSTEM OF PASSIVE OPTICAL NETWORK**

(30) Priority: 28.04.2008 CN 200810027746
(71) Applicant: HUAWEI DEVICE CO., LTD, Shenzhen, Guangdong 518129 (CN)
(72) Inventor: ZOU, Shimin, Shenzhen Guangdong 518129 (CN)
(74) Representative: Kreuz, Georg Maria
(86) International application number: PCT/CN2009/071277
(87) International publication number: WO 2009/132549

(57) **Abstract**

A PON extender disclosed herein includes: an optical amplifier, adapted to compensate optical power for PON signals in a downlink channel; an optical control switch, connected with an ONU and adapted to extract overhead information of the PON signals in the downlink channel, and select one channel of ONU uplink signals as output uplink channel PON signals according to the extracted overhead information; and a regenerating device, adapted to regenerate optical signals for the uplink channel PON signals output under control of the optical control switch. A system and a method for extending a PON are disclosed herein. Through the embodiments of the present invention, a new PON extender is provided for the PON, and therefore, the split ratio of the PON fulfills higher requirements.

## Description

This application claims priority to Chinese Patent Application No. 200810027746.6, filed with the Chinese Patent Office on April 28, 2008 and entitled "Method, Apparatus, and System for Extending Passive Optical Network", which is hereby incorporated by reference in its entirety.

### FIELD OF THE INVENTION

The present invention relates to communications application, and in particular, to a method, an apparatus, and a system for extending a Passive Optical Network (PON).

### BACKGROUND

As a broadband optical access technology, the PON is characterized by the point-to-multipoint physical topology, and is composed of an Optical Line Terminal (OLT), a passive Optical Distribution Network (ODN), and more than one Optical Network Unit (ONU). Multiple ONUs share fiber resources and OLT ports. The ODN is passively connected with one OLT and one or more ONUs. The optical branch point in the ODN needs no active node devices, but needs a passive optical brancher. Therefore, the PON brings these merits: shared bandwidth resources, reduced cost of equipment room, high security of equipment, fast network construction, and low overall cost of network construction.

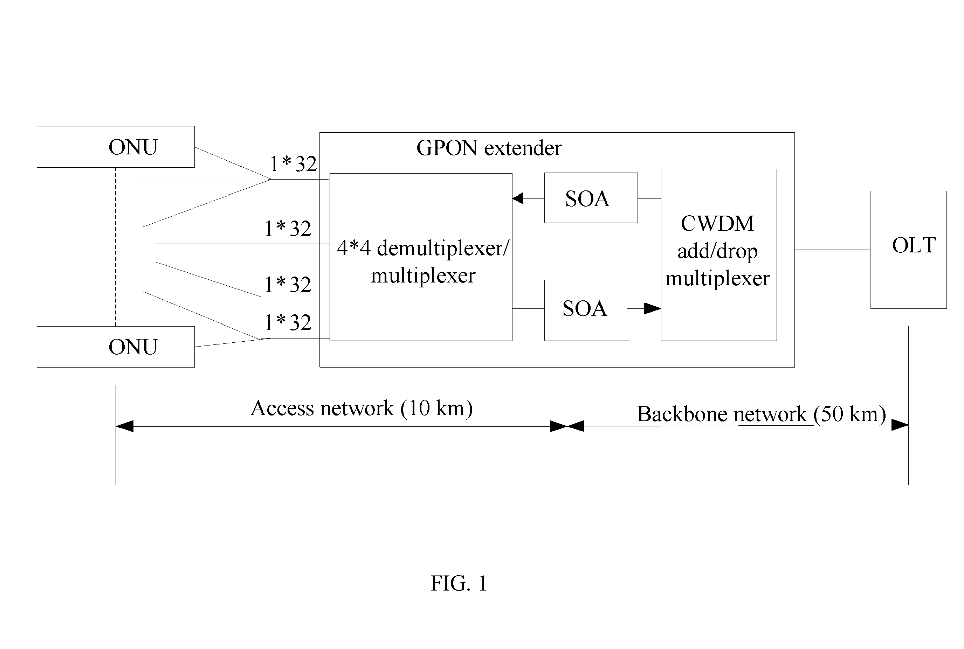

Currently, the operator imposes a certain requirement on the transmission distance and the split ratio of the PON to meet more user requirements. FIG. 1 shows a structure of a system for all-optical range extension and capacity expansion of a GPON. On the remote side of the existing Gigabit-capable PON (GPON) system, an all-optical active GPON extender is available for extending the transmission distance of the GPON. The working principles of the extender are: In the downlink direction, the OLT releases wavelength signals of a Coarse Wavelength Division Multiplexing (CWDM) band to the GPON extender, after being transmitted for 50 km, the signals arrive at a local switch node, namely, a GPON extender. The GPON extender uses a Semiconductor Optical Amplifier (SOA) as a main bidirectional amplification apparatus. The CWDM demultiplexer separates the downlink signals out, and the downlink signals are sent by a CWDM Add-Drop Multiplexer (ADM) to the downlink SOA for amplification. The functions of the CWDM ADM are to add and drop channels of certain wavelengths selectively from the optical transmission channel, without affecting the transmission of the channels of other wavelengths. Because continuous signals of the GPON run in the downlink direction, and the wavelength layout of the downlink direction falls within the amplification range of the SOA, the downlink SOA performs only power compensation for optical signals. After a downlink signal passes through the SOA and an optical attenuator which adjusts the signal to a desired output power, a 4*4 demultiplexer/multiplexer splits the downlink signal into four channels of GPON downlink signals according to the wavelength, and sends the four channels of GPON downlink signals to their own ONU. In the uplink direction, the uplink direction of every group of GPONs has different CWDM wavelengths, and the uplink burst lasers of all ONUs in the same group of GPONs have the same CWDM wavelengths, namely, there are four types of different ONU, and each type of ONU has a different uplink wavelength.. Because the GPON signals in the uplink direction are burst signals, each ONU sends their own burst packets at different time, the distance from each ONU to the GPON extender of the optical splitter varies, and the power of each burst packet varies. The SOA gain recovery is faster than the Erbium Doped Fiber Amplifier (EDFA) gain recovery response speed, and amplification effect is exerted on the burst packets of different levels. The GPON extender is capable of not only compensating power, but also serving as an optical splitter.

However, the preceding GPON extender involves use of CWDM to expand the overall capacity of the PON. Therefore, the ONU needs to be customized in the uplink direction according to the CWDM wavelength, which increases the cost of implementing the ONU. Moreover, the OLT also needs to be customized according to the CWDM wavelength, which further increases the cost. In the process of implementing the preceding system, even of the capacity is expanded through CWDM, the capacity is essentially the total capacity of four GPONs. The split ratio of a single GPON is still 1:32. The solution in the prior art does not improve the split ratio of the GPON essentially, or does not meet the requirements of the future long-reach PONs of a high split ratio. The GPON extender in the prior art supports a limited number of ONUs, provides a very small split ratio, and makes it difficult to extend system equipment.

### SUMMARY

In view of the defects involved in the prior art, the embodiments of the present invention provide a method, an apparatus, and a system for extending a PON, and provide a new PON extender for the PON. Therefore, the extension range of the PON is longer, and the split ratio of the PON fulfills higher requirements.

An apparatus for extending a PON in an embodiment of the present invention includes:
an optical amplifier, adapted to compensate optical power for PON signals in a downlink channel;
an optical control switch, connected with an ONU and adapted to extract overhead information of the PON signals in the downlink channel, and select one channel of ONU uplink signals as output uplink channel PON signals according to the extracted overhead information; and
a regenerating device, adapted to regenerate optical signals for the uplink channel PON signals output under control of the optical control switch.

Accordingly, a system for extending a PON in an embodiment of the present invention includes: an OLT, a PON extender connected with the OLT, and at least one ONU connected with the other side of the PON extender.

The OLT is adapted to exchange optical signals with the at least one ONU through range extension and optical splitting of the PON extender.

The PON extender is adapted to compensate optical power for the PON signals in the downlink channel, extract the overhead information of the PON signals in the downlink channel, select one channel of ONU uplink signals as output uplink channel PON signals according to the extracted overhead information, and regenerate optical signals for the output uplink channel PON signals.

Accordingly, another method for extending a PON in an embodiment of the present invention includes:
performing optical power compensation for PON signals in a downlink channel;
extracting overhead information of the PON signals in the downlink channel;
selecting one channel of uplink signals as output uplink channel PON signals according to the extracted overhead information; and
regenerating optical signals for the output uplink channel PON signals.

In the embodiments of the present invention, through the PON extender, the optical control switch controls input and output of the PON signals in the uplink channel so that the extension range of the PON extender is longer; at any time, signals of only one ONU pass through the optical control switch, and the insertion loss of the optical switch is consistent, and therefore, the number of extended ONUs is independent of the insertion loss, more ONUs can be extended easily, and the split ratio fulfills higher requirements.

### BRIEF DESCRIPTION OF THE DRAWINGS

To make the technical solution under the present invention or the prior art clearer, the accompanying drawings for illustrating the embodiments of the present invention or the prior art are outlined below. Evidently, the accompanying drawings are for the exemplary purpose only, and those skilled in the art can derive other drawings from such accompanying drawings without making any creative effort.
FIG. 1 shows a structure of a system for all-optical range extension and capacity expansion of a GPON;
FIG. 2 shows a structure of a system for extending a PON in an embodiment of the present invention;
FIG. 3 shows a structure of an apparatus for extending a PON in an embodiment of the present invention;
FIG. 4 shows another structure of an apparatus for extending a PON in an embodiment of the present invention;
FIG. 5 shows another structure of an apparatus for extending a PON in an embodiment of the present invention; and
FIG. 6 is a flowchart of a method for extending a PON in an embodiment of the present invention.

### DETAILED DESCRIPTION OF THE EMBODIMENTS

The embodiments of the present invention provide a method, an apparatus, and a system for extending a PON, and provide a new PON extender and an optical splitter for the PON. Therefore, the extension range of the PON is longer, and the split ratio of the PON fulfills higher requirements.

The exemplary embodiments of the present invention are elaborated below with reference to the accompanying drawings.

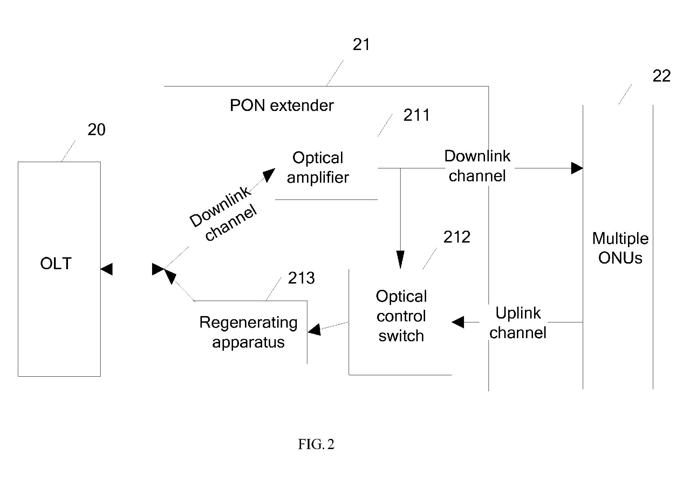

FIG. 2 shows a structure of a system for extending a PON in an embodiment of the present invention. The system includes an OLT 20, a PON extender 21, and an ONU 22. The OLT 20 is adapted to exchange PON signals with a remote ONU 22. The PON signals are extended and split by the PON extender 21, and then enter every ONU 22. The PON extender 21 includes an optical amplifier 211, an optical control switch 212, and a regenerating device 213. The optical amplifier 211 is adapted to compensate optical power for PON signals in a downlink channel. The optical control switch 212 is connected with multiple ONUs 22, and is adapted to extract overhead information of the PON signals in the downlink channel, where the overhead information includes the sending time position information of each ONU, including the start time position of the preamble of the burst packet and the end position of the burst packet; generate a turn-on signal of controlling the optical switch according to the extracted overhead information, where the turn-on time is the start time position of the preamble of the burst packet, and the turn-off time is the end position of the burst packet; connect up different ONUs at different time; control input of the PON signals in the uplink channel; and select one channel of ONU 22 uplink signals as output uplink channel PON signals. The regenerating device 213 is adapted to regenerate optical signals for the uplink channel PON signals output under control of the optical control switch 212.

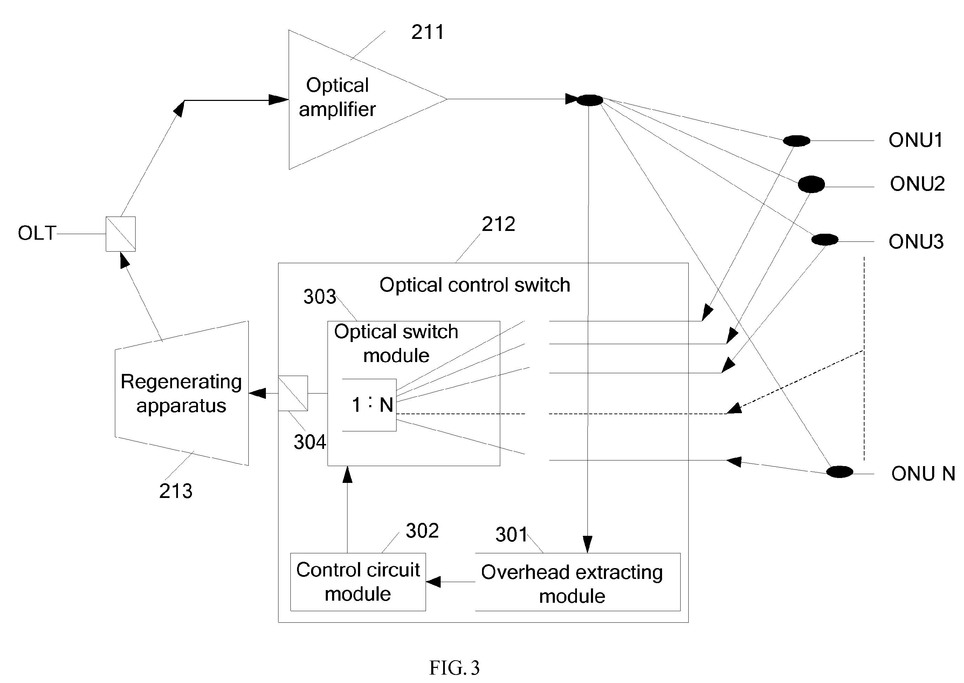

FIG. 3 shows a structure of an apparatus for extending a PON in an embodiment of the present invention. The PON extender includes an optical amplifier 211, an optical control switch 212, and a regenerating device 213. The optical control switch 212 includes an overhead extracting module 301, a control circuit module 302, and an optical switch module 303. The overhead extracting module 301 is adapted to extract overhead information from the PON signals in the downlink channel. The control circuit module 302 is adapted to control the turn-on and the turn-off of the optical switch module 303 according to the overhead information extracted by the overhead extracting module 301. The optical switch module 303 is adapted to select one channel of ONU uplink signals as output uplink channel PON signals under control of the control circuit module 302.
It is to be noted that the optical switch module 303 is a 1:N switch unit, where N is a natural number such as 1, 2, and 3. Because the access of N ONUs may be controlled according to design requirements, the ONUs are highly extensible. Accordingly, the optical control switch 212 further includes a filter module 304, which is connected with the regenerating device 213 and the optical switch module 303. Some downlink optical signals undergo the optical power compensation performed by the optical amplifier 211 and then enter the uplink channel. For the output of the optical control switch 212, an optical splitter based on thin film filtering needs to be added. The optical splitter is essentially a filter which filters the optical signals in the uplink channel based on the principles of transmission and reflection. The input optical signals of the optical control switch 212 include the optical signals coupled from the output light of the downlink amplifier 211, and fall within the 1550 waveband. Such light does not need to enter the uplink channel, and a filter needs to be added to filter out such light. In this way, the light of a 1310 nm wavelength can penetrate in the uplink direction, and the light of other wavelengths is reflected.

In the process of implementing this embodiment, in the downlink direction, the GPON signals or the Ethernet PON (EPON) signals pass through the optical splitter and enter the optical amplifier 211 in the downlink channel. The optical amplifier 211 performs optical power compensation for the downlink continuous PON signals, and then outputs the signals to every ONU through a power coupler. In the uplink direction, the uplink burst signals of each ONU arrive at the corresponding power coupler at different time, and arrive at a 1:N optical control switch 212 at the same time. The circuit control module 302 controls the optical switch module 303 according to the overhead information of the PON signals in the downlink channel, where the overhead information is extracted by the overhead extracting module 301, and the overhead information includes the sending time position information of each ONU, including the start time position of the preamble of the burst packet and the end time position of the burst packet. A turn-on signal of controlling the optical switch is generated according to the extracted overhead information, where the turn-on time is the start time position of the preamble of the burst packet, and the turn-off time is the end position of the burst packet. Different ONUs are connected up at different time. In the detailed implementation process, the turn-on time and the turn-off time of the optical switch module 303 are controlled according to the GPON bandwidth map information. The signals output by the optical switch module 303 undergo power compensation performed by the uplink optical amplifier, and then the signals are coupled to the uplink and sent to the OLT. The optical switch module 303 may be a LiNbO3 (LN) optical switch or an SOA optical switch. The optical switch module 303 is connected with the uplink channels of at least one ONU. Under the control of the control circuit module 302, the optical switch module 303 selects only one ONU connected with it to output the uplink signals. Under the control of the control circuit module 302, the optical switch module 303 turns on the optical switch when the uplink burst packet of the ONU arrives, and switches over to another channel of ONU uplink signals when the burst packet completes. In practice, multiple optical control switches 212 may be added in the PON extender to implement the high-capacity split ratio. The uplink PON signal channel is connected with the ONU or the optical splitter. The overhead extracting module 301 extracts the overhead information from the downlink PON signals. The extraction process may be performed before or after the optical amplifier 211 performs optical power compensation for the downlink PON signals. The optical amplifier 211 may be an EDFA or an SOA. The regenerating device 213 may be an all-optical regenerating device or an Optical-Electrical-Optical (OEO) regenerating device.

In practice, continuous optical signals run in the downlink direction. The optical amplifier 211 can compensate for the optical power easily only if the downlink optical wavelength falls within the amplification range of the optical amplifier 211. If the OLT in the downlink direction collects light in the 1550 band, the optical compensation can be implemented through an EDFA directly. The high output power of the EDFA is combined with the Variable Optical Attenuator (VOA) set in the EDFA to perform power compensation for the applications with different split ratios. For example, when the split ratio is 1:64, the power attenuation brought by the split ratio is about 6 x 3 = 18 dB. Taking the insertion loss 1dB into account, the total power attenuation is 19 dB. It is assumed that the ONU is 10 km away from the extender. About an additional 4 dB power budget is required. Supposing that the receiving sensitivity of the ONU is -18 dB, the requirements are fulfilled only if the output of the optical amplifier 211 is controlled to be +5 dB (19+4-18). When the split ratio increases from 1:64 to 1:256, a budget increases by 6 dB, and the optical amplifier adjusts the VOA to control the output power to be +11 dB so that the requirements are fulfilled. Because the saturated output power of the EDFA is over +20 dB, the preceding power compensation requirements can be fulfilled easily. It is to be noted that the optical amplifier in 211 the downlink channel may be an SOA.

In the uplink direction, under control of the optical control switch 212, the fiber of each ONU is connected at different time. In this way, regardless of the number of fibers that enter the optical control switch 212, the optical power attenuation is always within a certain range, and depends only on the distance between the ONU and the optical control switch 212, but not the number of ONUs. The optical switch module 303 in the optical control switch 212 may be a combination of small optical switches connected through optical couplers. With respect to the switching speed of the optical control switch 212, the 1:N optical switch based on LN accomplishes up to a switching speed of 10 ns or higher. For the GPON signals, the speed of the optical control switch 212 needs to meet the protection time requirement between the burst packets of the GPON. The protection time for the GPON is 78 ns, and the protection time for the optical control switch 212 is far less than 78 ns. If the optical control switch 212 finishes the switching operation at the end of the burst packet or before the preamble of the burst packet, the switching brings no impact on the format of the burst packet. Other high-speed optical switches in addition to the LN optical switch exist, for example, SOA-based optical switch, whose speed is up to 2 ns. Because the length of the preamble of the EPON is up to 400 ns, the required speed of the optical switch is much lower than that of the GPON. If the switching time of the optical control switch 212 meets the requirements of the GPON, the requirements of the EPON are met. In the uplink direction, the overhead extracting module 301 may extract the overhead information from the PON signals in the downlink direction after the optical amplifier 211 performs optical compensation. If the overhead information of the PON signals is sent in other modulation modes, the overhead information may be extracted from the PON signals in the downlink direction before the optical amplifier 211 performs optical compensation. For example, the corresponding overhead information is received from the optical monitoring channel or in the mode such as Frequency-Shift Keying (FSK). In the case of GPON, the overhead extracting module 301 in the uplink direction may extract the overhead information from the downlink direction of the GPON signal directly. The overhead information includes the sending time position of each ONU. For a GPON signal, the overhead information is the uplink Bandwidth Map (BW-MAP). The downlink overhead information of the GPON includes the BW-MAP information, indicating the time for each ONU to send the uplink burst packet, and the time for each ONU to end the sending. Therefore, if the GPON overhead information is extracted from this device, the start time and the end time of sending the burst packet of each ONU are known, and the arrival time and the end time of each burst packet arriving at the input port of the optical control switch are known. Because the time of each burst packet is known, a control signal may be generated to select the uplink burst packet on the basis of allowing for the path delay. For example, through extraction of the BW-MAP in the overhead information, it is known that the burst packet of the ONU1 arrives at time T11 and ends at time T12, and the burst packet of ONU2 arrives at time T21 and ends at time T22. Allowing for the path delay D1 and D2 respectively, the control circuit needs to be turned on to let pass of the signal from the ONU1 at time T11+D1, and turned off at time T12+D1; the control circuit switches over to the input from the ONU2 at time T21+D2 and lets pass of the burst packet of the ONU2, and so on till the uplink burst packets of all ONUs are let through. Then, the next cycle begins. The next cycle begins with the ONU1 and ends at the ONU_{N}. The cycle goes on, and the control time changes with the change of the extracted BW-MAP. According to the overhead information extracted by the overhead extracting module 301, the control circuit module 302 generates the corresponding control signal to control the turn-on and the turn-off of the optical switch module 303. The turn-on time is in the start time position of the preamble of the burst packet, and the turn-off time is in the end time position of the burst packet. Different ONUs are connected up at different time. Therefore, at any time, the optical switch module 303 is connected with only one ONU. Such an optical switch module is a time-based optical splitter. The insertion loss does not change with the changed number of ONUs. Through such an extender, the existing power budget does not change with the upgrade of the user quantity.

The signals output by the optical switch module 303 are sent to the regenerating device 213 to regenerate optical signals. The regeneration mode may be all-optical or OEO. The all-optical regenerating device may be an SOA. The SOA amplifies the PON signals, and performs optical compensation only. If the uplink regeneration mode is an OEO regeneration mode, because the OEO regeneration mode requires precise time control, the overhead information extracted by the overhead extracting module 301 in the optical control switch 212 needs to be used to generate a control signal, which controls the reset of the uplink burst optical module and the recovery of the burst clock.

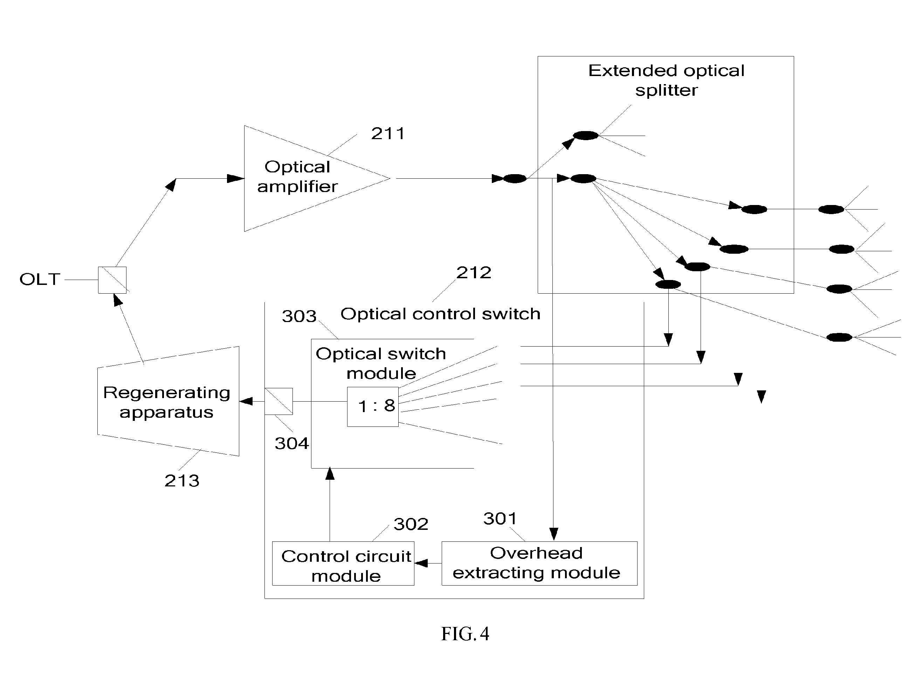

FIG. 4 shows the structures of an extensible optical splitter and an extensible PON extender in this embodiment. The working principles are the same as the illustration in FIG. 3. The difference lies in that: The passive optical splitter has the group extending capability and four 1:2 passive power splitters. The second group is extensible splitters. Their internal structure is the same as that of the first group. Positions are reserved inside the PON extender to allow for more splitters. When more ONU users need to be added, the added splitters are installed in the reserved positions. The PON extender in FIG. 3 serves as an extender and a splitter concurrently. The splitter is directly connected with each ONU. The splitter in FIG. 4 has two levels. The first level is 1:4, and the second level is near the ONU and is 1:N, where N is a natural number. When N = 32, the total split ratio is 128. The distance from the first-level splitter to the second-level splitter is greater than 10 km. With the same number of ONUs, compared with the budget in FIG. 3, the power budget of the EDFA has these additional budgets: 1:2 extension budget (3 dB), and 10 km transmission loss budget (4 dB). The implementation is still easy through power compensation of the EDFA. Unlike the PON extender in FIG. 3 which is necessarily installed in the position of the splitter, the PON extender here is more flexible, and the requirements on the number of the input ports on the optical control switch 212 are reduced. Only 1:4 or 1:8 optical switches are required. The following description assumes that the optical switches are 1:8 optical switches. With the 1:8 optical switches in use, four ports need to be reserved for the purpose of extension. In FIG. 4, if each port of the optical control switch 201 carries 32 ONUs, a total of 256 ONUs are allowed. Based on such design, the capacity can be extended to more ONUs. Each group of ONUs on the ODN2 (10 km) can be distributed to different time positions in the uplink direction according to the group. The optical control switch 211 performs switching according to the group, or performs switching according to the uplink burst packet of each ONU separately only if the accurate position of each ONU uplink signal is known. Although the PON extender has four fibers connected with the second-level passive optical splitter, the ONU uplink directions on the four fibers share the same frame structure.

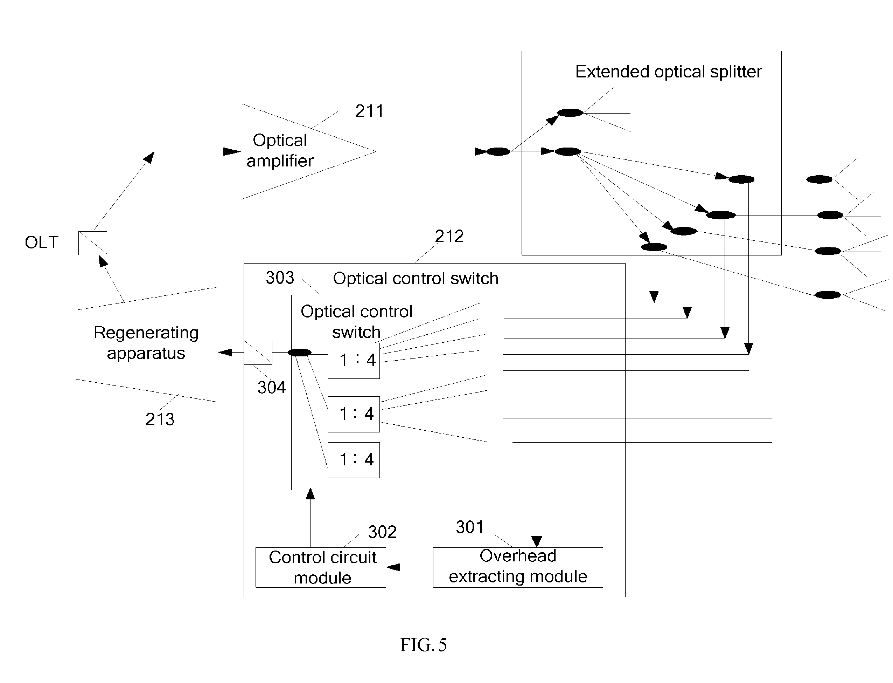

FIG. 5 shows a structure of a PON extender of an extensible optical control switch in this embodiment. The principles of this solution are almost the same as the principles in FIG. 4. The difference is: The structure of the optical control switch 212 is extensible, and can be extended in steps with the increase of users. For example, at the beginning, a 1:4 optical switch module 303 and a 1:4 splitter are used to carry 1-128 users. When the number of users exceeds 128, more 1:4 optical switches and 1:4 splitters are added in the reserved positions so that the user quantity can increase to 256. The switch ratio of the optical switch module 303 may be 1:N, and the split ratio of the splitter may be 1:N, where N is a natural number. When the user quantity changes, the corresponding ONUs are easier to extend.

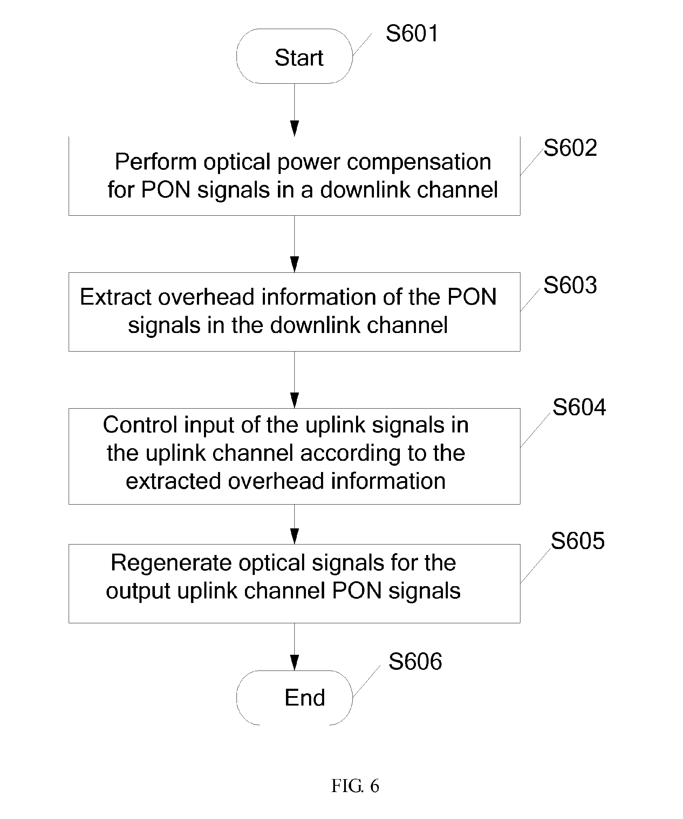

FIG. 6 is a flowchart of a method for extending a PON in an embodiment of the present invention. The implementation process includes the following steps:
Step S601: Start the process of extending a PON.
Step S602: Compensate optical power for PON signals in the downlink channel.
Step S603: Extract overhead information of the PON signals in the downlink channel.

It is to be noted that step S603 may occur before or after step S602.

Step S604: Control input of the uplink signals in the uplink channel according to the extracted overhead information.

The optical switch is controlled according to the extracted overhead information so that the optical switch selects one channel of ONU uplink signals connected with the optical switch as the output uplink channel PON signals. According to the extracted overhead information, the optical switch is turned when the uplink burst packet of the optical network arrives, and the optical switch switches over to another channel of ONU uplink signals when the burst packet completes. The overhead information includes the sending time position information of each ONU, including the start time position of the preamble of the burst packet and the end position of the burst packet. A turn-on signal of controlling the optical switch is generated according to the extracted overhead information, where the turn-on time is the start time position of the preamble of the burst packet, and the turn-off time is the end position of the burst packet. Different ONUs are connected up at different time.

Step S605: Regenerate optical signals for the output uplink channel PON signals.

Before regeneration of the optical signals, the optical signals coupled to the uplink channel need to be filtered out of the downlink channel.

Step S606: End the process of extending a PON.

In conclusion, through the PON extender under the present invention, the optical control switch selects one channel of PON uplink signals as output uplink channel PON signals. At any time, the signals of only one ONU pass through the optical control switch, and the insertion loss of the optical switch is consistent. Therefore, the number of added ONUs is independent of the insertion loss; the difficulty of optical power compensation in the uplink direction is avoided, and the extension in the uplink direction is almost independent of the split ratio. The optical power compensation in the downlink direction is technically easy to implement, and a long transmission distance is accomplishable. The number of added ONUs depends on only the downlink optical power compensation and the switching speed of the uplink optical switch. Therefore, the solution provides higher extensibility than the prior art, overcomes the low split ratio in the prior art, accomplishes a high split ratio, and can accommodate plenty of users.

It is understandable to those skilled in the art that all or part of the steps of the preceding embodiments may be implemented by hardware instructed by a computer program. The program may be stored in a computer-readable storage medium. When being executed, the program performs the processes covered in the preceding embodiments. The storage medium may be a magnetic disk, Compact Disk (CD), Read-Only Memory (ROM), or Random Access Memory (RAM).

Although the invention has been described through several exemplary embodiments, the invention is not limited to such embodiments. It is apparent that those skilled in the art can make modifications and variations to the invention without departing from the scope of the invention. The invention is intended to cover the modifications and variations provided that they fall in the scope of protection defined by the following claims or their equivalents.

## Claims

1. A Passive Optical Network (PON) extender, comprising:
an optical amplifier, adapted to compensate optical power for PON signals in a downlink channel;
an optical control switch, connected with an Optical Network Unit (ONU) and adapted to extract overhead information of the PON signals in the downlink channel, and select one channel of ONU uplink signals as output uplink channel PON signals according to the extracted overhead information; and
a regenerating device, adapted to regenerate optical signals for the uplink channel PON signals output under control of the optical control switch.

2. The PON extender of claim 1, wherein the optical control switch comprises:
an overhead extracting module, adapted to extract the overhead information from the PON signals in the downlink channel;
a control circuit module, adapted to control turn-on and turn-off of an optical switch module according to the overhead information extracted by the overhead extracting module; and
the optical switch module, adapted to select one channel of the ONU uplink signals as the output uplink channel PON signals under control of the control circuit module.

3. The PON extender of claim 2, wherein the optical control switch further comprises:
a filter module, connected with the optical switch module and the regenerating device, and adapted to filter out optical signals in the downlink channel coupled to an uplink channel.

4. The PON extender of claim 3, wherein:
the optical switch module is connected with an uplink channel of at least one ONU, and the optical switch module selects only one ONU connected with it to output uplink signals under control of the control circuit module.

5. The PON extender of claim 4, wherein:
there is at least one optical switch module, and each optical switch module is connected with the uplink channel of at least one ONU.

6. The PON extender of claim 4 or claim 5, wherein:
the overhead information comprises the sending time position information of each ONU, and the time position information comprises a start time position of a burst packet and an end time position of the burst packet; and
under control of the control circuit module, the optical switch module turns on an optical switch according to the overhead information extracted by the overhead extracting module when an uplink burst packet of the ONU arrives, and switches over to uplink signals of another ONU when the burst packet completes.

7. The PON extender of claim 6, wherein:
the uplink channel of the ONU is directly connected with the optical control switch, or passes through a passive optical splitter and then is connected with the optical control switch.

8. The PON extender of claim 7, wherein:
the overhead extracting module extracts the overhead information from the PON signals in the downlink channel before or after the optical amplifier performs the optical power compensation for the PON signals in the downlink channel.

9. A system for extending a Passive Optical Network (PON), comprising an Optical Line Terminal (OLT), a PON extender connected with the OLT, and at least one Optical Network Unit (ONU) connected with the other side of the PON extender, wherein:
the OLT is adapted to exchange optical signals with the at least one ONU through range extension and optical splitting of the PON extender; and
the PON extender is adapted to compensate optical power for PON signals in a downlink channel, extract overhead information of the PON signals in the downlink channel, select one channel of ONU uplink signals as output uplink channel PON signals according to the extracted overhead information, and regenerate the optical signals for the output uplink channel PON signals.

10. A method for extending a Passive Optical Network (PON), comprising:
performing optical power compensation for PON signals in a downlink channel;
extracting overhead information of the PON signals in the downlink channel;
selecting one channel of Optical Network Unit (ONU) uplink signals as output uplink channel PON signals according to the extracted overhead information; and
regenerating optical signals for the output uplink channel PON signals.

11. The method of claim 10, wherein:
the overhead information is extracted from the PON signals in the downlink channel before the optical power compensation is performed for the PON signals in the downlink channel.

12. The method of claim 11, wherein:
the overhead information is extracted from the PON signals in the downlink channel after the optical power compensation is performed for the PON signals in the downlink channel.

13. The method of claim 11 or claim 12, wherein:
the overhead information comprises sending time position information of each ONU, and the time position information comprises a start time position of a burst packet and an end time position of the burst packet; and
the selecting of one channel of the ONU uplink signals as the output uplink channel PON signals according to the extracted overhead information comprises:
turning on an optical switch according to the extracted overhead information when an uplink burst packet of the ONU arrives, and switching over to another channel of the ONU uplink signals when the burst packet completes.

14. The method of claim 13, wherein before the optical signals are regenerated for the output uplink channel PON signals, the method further comprises:
filtering out optical signals in the downlink channel which are coupled to an uplink channel.
